# EUROPÄISCHE PATENTSCHRIFT

(11) **EP 1 565 347 B1**
(45) Veröffentlichungstag und Bekanntmachung des Hinweises auf die Patenterteilung: **02.05.2007**
(21) Anmeldenummer: 03769217.5
(22) Anmeldetag: 26.09.2003
(51) Int. Cl.: B60Q 1/52

(54) **VERFAHREN UND VORRICHTUNG ZUR WARNUNG DES FAHRERS EINES KRAFTFAHRZEUGES**
METHOD AND DEVICE FOR WARNING THE DRIVER OF A MOTOR VEHICLE
PROCEDE ET DISPOSITIF DE MISE EN ALERTE DU CONDUCTEUR D'UN VEHICULE AUTOMOBILE

(30) Priorität: 16.11.2002 DE 10253509
(43) Veröffentlichungstag der Anmeldung: 24.08.2005
(73) Patentinhaber: ROBERT BOSCH GMBH, 70442 Stuttgart (DE)
(72) Erfinder: KNOLL, Peter, 76275 Ettlingen (DE)
(86) Internationale Anmeldenummer: PCT/DE2003/003214
(87) Internationale Veröffentlichungsnummer: WO 2004/045906

(56) Entgegenhaltungen:
- US-A1- 2002 011 925
- US-B1- 6 327 536

## Beschreibung

### Stand der Technik

Die Erfindung betrifft ein Verfahren und eine Vorrichtung zur Warnung des Fahrers eines Kraftfahrzeuges.

Plötzlich auftauchende Hindernisse in der Fahrzeugumgebung führen häufig zu kritischen Fahrsituationen für den Fahrer eines Kraftfahrzeuges. Solche Fahrsituationen ereignen sich beispielsweise bei schlechten Sichtverhältnissen. Neben den Beleuchtungsverhältnissen bestimmen die Wetterverhältnisse die Sicht des Fahrers. Besonders schwierige Verhältnisse liegen vor, wenn schlechte Beleuchtungsverhältnisse und schlechte Wetterverhältnisse vorhanden sind, beispielsweise wenn bei Nacht Regen die Sicht vermindert. Tauchen bei diesen schlechten Sichtverhältnissen für den Fahrer nicht oder erst spät sichtbare Hindernisse überraschend auf, ist dies häufig die Ursache von Verkehrsunfällen.

Aus der DE 40 32 927 C2 ist eine Vorrichtung zur Verbesserung der Sichtverhältnisse in einem Kraftfahrzeug mit einer infrarotempfindlichen Kamera und mit einer als Head-up-Display ausgebildeten Anzeigevorrichtung bekannt. Es wird vorgeschlagen, dass als Fahrerinformationen das Bild der Kamera als virtuelles Bild der äußeren Landschaft visuell überlagert wird. Eine deutliche Warnung des Fahrers findet nicht statt.

Aus der US 2002/0011925 A1 ist eine Anzeigevorrichtung zur Anzeige vom Bildern oder Symbolen bekannt, wobei die Anzeigedauer unterhalb einer bewussten und oberhalb einer unbewussten Wahrnehmungsschwelle liegt.

Aus der US 6 327 536 B1 ist eine Umgebungsüberwachungsvorrichtung für Kraftfahrzeuge zur Erkennung von Bewegungen von in der Umgebung befindlicher Objekte, bekannt.

### Vorteile der Erfindung

Das Verfahren und die Vorrichtung zur Warnung eines Fahrers eines Kraftfahrzeuges der vorliegenden Erfindung ermöglicht eine Warnung des Fahrers vor Objekten in der Umgebung des Kraftfahrzeuges, bevor das Objekt für den Fahrer sichtbar ist. Dies führt in vorteilhafter Weise zu einer zeitlichen Verschiebung und damit früheren Warnung vor einem Objektes in der Umgebung des Kraftfahrzeuges. Durch die Erzeugung wenigstens einer optischen Warnung in Richtung des wenigstens einen Objektes im Blickfeld des Fahrers, wird eine Blickhinwendung des Fahrers bewirkt. Besonders vorteilhaft ist dabei, dass die Blickhinwendung reflexartig durch den Fahrer erfolgt, ohne dass er dies willentlich durchführen muss. Da reflexartige Reaktionen im allgemeinen wesentlich schneller sind als willentlich gesteuerte Abläufe, wird eine schnelle und zielsichere Blickhinwendung in Richtung des Objektes erreicht. Durch die Erzeugung der optischen Warnung in Richtung des Objektes, wird die Blickhinwendung in vorteilhafter Weise so gesteuert, dass die Aufmerksamkeit des Fahrers in die Richtung gelenkt wird, wo sich das Objekt in der Umgebung des Kraftfahrzeuges tatsächlich befindet. Zusammenfassend tragen das nachfolgend beschriebene Verfahren und die Vorrichtung in besonders vorteilhafter Weise zu einer Reduzierung der Unfallzahlen bei einer gleichzeitigen Entlastung des Fahrers eines Kraftfahrzeuges bei. Dies führt insgesamt zu dem herausragenden Vorteil, dass die Verkehrssicherheit erhöht wird.

Vorteilhaft ist ein Lichtfleck als optische Warnung, da Lichtflecke einfach zu erzeugen sind. Die Verwendung wenigstens eines Lichtfleckes führt in vorteilhafter Weise zu einem günstigen aber dennoch effizienten Verfahren und einer Vorrichtung. Die Erzeugung eines Warnsymbols als optische Warnung hat demgegenüber den Vorteil, dass in der wenigstens einen optischen Warnung zusätzliche Informationen besonders einfach erzeugt werden können. Durch wenigstens ein Warnsymbol ist es möglich, Informationen über den Objekttyp, beispielsweise dass das Objekt ein Personenkraftwagen und/oder ein Lastkraftwagen und/oder ein Motorrad und/oder ein Radfahrer und/oder ein Fußgänger ist, dem Fahrer darzustellen. Durch die Verwendung eines Warnsymbols anstatt von Schriftzeichen sind die Informationen international verständlich. Wenigstens ein Lichtfleck und/oder wenigstens ein Warnsymbol als wenigstens eine optische Warnung führen in vorteilhafter Weise zu günstigen Herstellungskosten des nachfolgend beschriebenen Verfahrens und der Vorrichtung, da keine länderspezifischen Anpassungen an unterschiedliche Sprachen notwendig sind.

Durch die Veränderung der wenigstens einen optischen Warnung in der Anzeigedauer und/oder der Wiederholfrequenz und/oder der Größe und/oder der Farbe und/oder der Intensität wird die Aufmerksamkeit des Fahrers unterschiedlich stark erregt. In besonders vorteilhafter Weise ist es möglich, eine unterschiedlich schnelle Blickhinwendung des Fahrers je nach Objekt und/oder der Gefährlichkeit des Objektes für den Fahrer des Kraftfahrzeuges zu bewirken. Beispielsweise ist es in gefährlichen Situationen möglich, durch einen roten, großen Lichtfleck mit hoher Leuchtintensität eine sehr schnelle Blickhinwendung und damit Aufmerksamkeitserregung des Fahrers des Kraftfahrzeuges in Richtung des für den Fahrer noch nicht sichtbaren Objektes in der Kraftfahrzeugumgebung zu erreichen. Eine gefährliche Situation liegt beispielsweise dann vor, wenn von einem Objekt in der Umgebung des Kraftfahrzeuges eine Unfallgefahr ausgeht.

Vorteilhaft ist, wenn die wenigstens eine optische Warnung unmittelbar vor der Sichtbarkeit des wenigstens einen Objektes für den Fahrer erfolgt, da der Fahrer nach der Blickhinwendung in Richtung des Objektes dieses sofort selbst erkennen kann. Hierdurch wird der Fahrer auf das Objekt aufmerksam gemacht, aber er hat gleichzeitig die Möglichkeit, die tatsächlich vorliegende Fahrsituation im Zusammenhang mit dem Objekt zu analysieren und zu bewerten. Dies ermöglicht es dem Fahrer in vorteilhafter Weise, gefährliche Fahrsituationen schnell und sicher zu erkennen. Er gewinnt dadurch wertvolle Zeit, um entsprechende Maßnahmen zur Gefahrenabwendung, wie Brems- oder Lenkmanöver, einzuleiten.

In vorteilhafter Weise führt die wenigstens eine optische Warnung in Abhängigkeit von der Fahrsituation zu einer Verminderung der durch den Fahrer zu verarbeitenden Informationsmenge. Hierdurch ist es möglich, dass eine optische Warnung wenigstens eines Objektes in der Fahrzeugumgebung nur dann erfolgt, wenn beispielsweise eine gefährliche Fahrsituation vorliegt.

Durch die Verwendung wenigstens eines Bildsensorsystems zur Erzeugung von optischen Informationen ist es in vorteilhafter Weise möglich, Objekte in der Kraftfahrzeugumgebung zu erfassen, die für den Fahrer selbst nicht direkt sichtbar sind. Beispielsweise sind Fußgänger, die sich unmittelbar vor einem Lastkraftwagen aufhalten, durch den Fahrer des Lastkraftwagens selbst nicht direkt zu sehen. Durch die hohe und zurückgesetzte Sitzposition des Fahrers des Lastkraftwagens ist die Sicht in diesen Umgebungsbereich für den Fahrer stark eingeschränkt. Durch den Einsatz wenigstens eines Bildsensorsystems zur Erfassung dieser Umgebungsbereiche des Kraftfahrzeuges ist es möglich, den Fahrer durch wenigstens eine optische Warnung über die Existenz eines Objektes in diesem Bereich zu informieren. Besonders vorteilhaft ist die Verwendung von wenigstens einem infrarotempfindlichen Bildsensorsystem, da infrarotempfindliche Bildsensorsysteme bei Nacht und/oder bei Regen und/oder bei Schneefall einen größeren Erfassungsbereich als der Fahrer eines Kraftfahrzeuges haben. Beispielsweise beträgt die Sichtweite eines Fahrers eines Kraftfahrzeuges bei Nacht mit Abblendlicht etwa 40 Meter, während infrarotempfindliche Bildsensorsysteme bei guten Sichtverhältnissen einen Objekterkennungsbereich zwischen 70 Meter und 140 Meter aufweisen.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1 eine Übersichtszeichnung des bevorzugten Ausführungsbeispiels zur Warnung des Fahrers eines Kraftfahrzeuges,
- Figur 2 ein Blockdiagramm der Vorrichtung zur Warnung des Fahrers eines Kraftfahrzeuges,
- Figur 3 ein Ablaufdiagramm.

### Beschreibung von Ausführungsbeispielen

Nachfolgend werden ein Verfahren und eine Vorrichtung zur Warnung des Fahrers eines Kraftfahrzeuges beschrieben. Über ein Signalisierungsmittel wird eine optische Warnung in Richtung wenigstens eines Objektes der Fahrzeugumgebung im Blickfeld des Fahrers erzeugt, wobei die optische Warnung zumindest vor der Sichtbarkeit des Objektes für den Fahrer erfolgt. Die optische Warnung ist wenigstens ein Lichtfleck und/oder wenigstens ein Warnsymbol, wobei wenigstens die Anzeigedauer veränderbar ist.

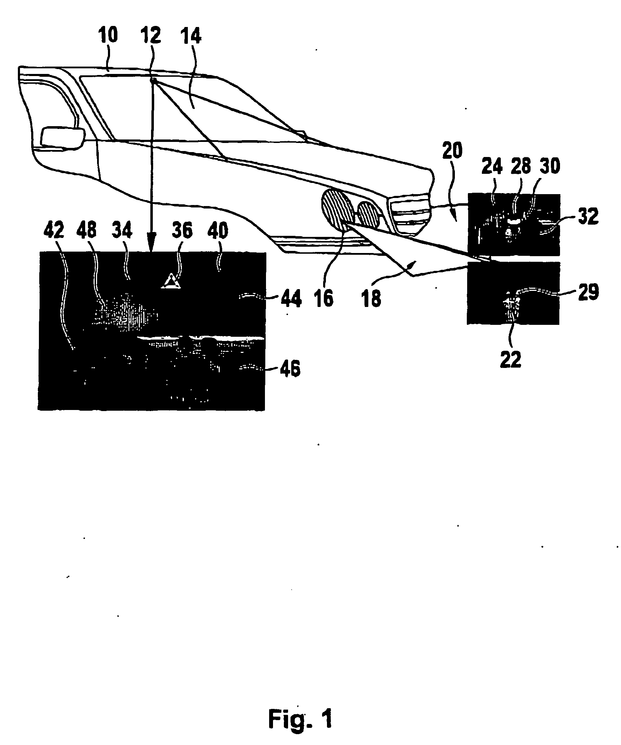

Figur 1 zeigt eine Übersichtszeichnung des bevorzugten Ausführungsbeispiels zur Warnung des Fahrers in einem Kraftfahrzeug 10, bestehend aus einem infrarotempfindlichen Bildsensorsystem 12, einem Scheinwerfer 16 und der tatsächlichen Sicht des Fahrers 40 des Kraftfahrzeuges 10. Das Bildsensorsystem 12 ist im Innenraum des Kraftfahrzeuges 10 hinter der Windschutzscheibe im Bereich des Innenrückspiegels angebracht. Dabei ist das Bildsensorsystem 12 so ausgerichtet, dass sich der Erfassungsbereich 14 des Bildsensorsystems 12 auf die Umgebung des Kraftfahrzeuges 10 in Fahrtrichtung erstreckt. Bei dem Bildsensorsystem 12 handelt es sich um eine infrarotsensitive Videokamera mit einem CMOS-Bildsensor und/oder einem CCD-Bildsensor. Der Bildsensor des Bildsensorsystems 12 erfasst wenigstens nahe Infrarotstrahlung im Wellenlängenbereich zwischen 780 nm und 1000 nm. Das Kraftfahrzeug 10 wird von einem Fahrer gelenkt, wobei sich das Kraftfahrzeug 10 auf einer Straße befindet und in Fahrrichtung fährt. In der in Figur 1 gezeigten Situation sind die Wetterverhältnisse und die Beleuchtungsverhältnisse schlecht, da Dunkelheit die Sicht des Fahrers beeinträchtigt. Zwei Scheinwerfer 16, die rechts und links im vorderen Bereich des Kraftfahrzeuges 10 in der Nähe der Stoßstange angeordnet sind, leuchten die Umgebung des Kraftfahrzeuges 10 in Fahrtrichtung aus. In Figur 1 ist in einer vereinfachten Darstellung nur ein Scheinwerfer 16 eingezeichnet. Neben dem Abblendlicht 18 im sichtbaren Spektralbereich erzeugen die Scheinwerfer 16 Fernlicht 20 im infraroten Spektralbereich. Die Reichweite des Abblendlichts 18 beträgt etwa 40 m. Die Scheinwerfer 16 haben eine Fernlichtfunktion im sichtbaren Spektralbereich, mit denen der Fahrer, je nach Witterungsbedingungen, bis zu 200 m sieht. Die Fernlichtfunktion im sichtbaren Spektralbereich ist in diesem Ausführungsbeispiel nicht aktiviert. In dem abgestrahlten Spektrum der Halogenlampen der Scheinwerfer 16 ist ein hoher Infrarotanteil enthalten, der durch diese modifizierten Scheinwerfer 16, unsichtbar für den Menschen, mit Fernlichtcharakteristik abgestrahlt wird. Die Wahrnehmung 22 des Fahrers ist durch die Dunkelheit stark eingeschränkt. Dagegen wird eine bessere Wahrnehmung 24 des infrarotempfindlichen Bildsensorsystems 12 durch die Modifikation der Frontscheinwerfer 16 mit wenigstens Abstrahlung von naher Infrarotstrahlung mit Wellenlängen zwischen 780 und 1000 nm mit Fernlicht 20 erreicht. In der Wahrnehmung 24 des infrarotempfindlichen Bildsensorsystems 12 ist ein entgegenkommendes Kraftfahrzeug 28, ein Fußgänger 30 und die Fahrbahn 32 zu sehen. Dagegen sind in der Wahrnehmung 22 des Fahrers lediglich die Scheinwerfer 29 des entgegenkommenden Kraftfahrzeuges 28 zu erkennen. Der hinter dem entgegenkommenden Kraftfahrzeug 28 querende Fußgänger 30 ist in der Wahrnehmung 24 des Bildsensorsystems 12 deutlich zu erkennen, während er in der Wahrnehmung 22 des Fahrers nicht sichtbar ist. Figur 1 zeigt weiterhin die tatsächliche Sicht des Fahrers 40, umfassend das Lenkrad 42, die Windschutzscheibe 44 und das Armaturenbrett 46. In diesem bevorzugten Ausführungsbeispiel wird die Wahrnehmung 24 des infrarotempfindlichen Bildsensorsystems 12 einer Verarbeitungseinheit zugeführt, die nur dann eine Warnung erzeugt, wenn ein gefährlicher Zustand erkannt wird. Mit Hilfe von geeigneten Bildverarbeitungsalgorithmen werden Objekte 28, 30 im Detektionsfeld, also im Bereich des Fahrbahnverlaufs, erkannt, und die Objekte 28,30 werden dem Fahrbahnverlauf zugeordnet. Die Fahrbahn 32 umfasst dabei grundsätzlich die eigene Fahrspur und die Fahrspur des Gegenverkehrs. Bei Autobahnen wird die Fahrbahn 32 durch wenigstens die eigenen Fahrspuren gebildet. Die Fahrbahn 32 wird durch die Fahrbahnmarkierungen wie Leitpfosten und/oder Fahrspurlinien festgelegt. Der Fahrbahnverlauf umfasst dabei die Fahrbahn 32 selbst und angrenzende Bereiche der Fahrbahn 32, wie beispielsweise Randstreifen und/oder Gehwege und/oder Radwege und/oder Einmündungen von Straßen. In diesem bevorzugten Ausführungsbeispiel werden als Objekte 28, 30 ein entgegenkommendes Kraftfahrzeug 28 und ein Fußgänger 30 erkannt. Die Verarbeitungseinheit erkennt die Gefährlichkeit der Situation. Über eine Projektionseinrichtung, in diesem Ausführungsbeispiel ein Einfach-Head-up-Display, wird an der Windschutzscheibe 44 ein kleines Warnsymbol 34, 36 als Markierung 34 des entgegenkommenden Kraftfahrzeugs 28 und als Markierung 36 des Fußgängers 30 in Blickrichtung des Fahrers an der so festgelegten Position des entgegenkommenden Kraftfahrzeuges 28 und des Fußgängers 30 erzeugt. Hierdurch wird eine Blickhinwendung des Fahrers in die Richtung ausgelöst, in der die Objekte 28, 30 als Hindernisse später für den Fahrer im Blickfeld tatsächlich erscheinen. In einer ersten Variante des bevorzugten Ausführungsbeispiels wird die optische Warnung unabhängig von der Position des Fahrers erzeugt. Dies ist möglich, da bei Objektentfernungen größer als 40 Meter der Betrachtungskonus für den vorausliegenden Streckenabschnitt relativ klein ist. In einer weiteren Variante wird von einem im Fahrzeuginnern angebrachten Bildsensorsystem (Kamera) der Kopf des Fahrers aufgenommen. Aus der Aufnahme des Kopfes wird die Kopfposition und/oder die Position der Augen des Fahrers ermittelt. Hieraus wird die Blickrichtung des Fahrers auf Punkte, die beispielsweise 100 m vor dem Kraftfahrzeug auf der eigenen Fahrspur liegen, als Sehstrahl berechnet. Die zu erzeugende optische Warnung wird mit dem so berechneten Sehstrahl zur Überdeckung gebracht, indem eine in x-Richtung und y-Richtung ablenkbare Projektionseinheit (Head-up-Display) entsprechend abgelenkt wird. Die Ablenkung erfolgt vorzugsweise durch mikromechanische Spiegel.

Als Warnsymbol 34, 36 wird in diesem Ausführungsbeispiel eine farbliche Markierung in Form eines roten und/oder gelben Dreiecks verwendet. Die tatsächliche Sicht des Fahrers 40 der Umgebung des Kraftfahrzeuges 10 nach Figur 1 umfasst demnach das Scheinwerferlicht 48 des entgegenkommenden Kraftfahrzeuges 28, eine gelbe Markierung 34 des entgegenkommenden Kraftfahrzeuges 28 und eine rote Markierung 36 des Fußgängers 30. Durch die Markierungen 34, 36 wird die Aufmerksamkeit des Fahrers des Kraftfahrzeuges 10 auf diese Objekte 28, 30 gerichtet. Die Bildverarbeitungsalgorithmen sind so ausgelegt, dass die Markierung 34, 36 von Objekten 28, 30 nur erfolgt, wenn sich die Objekte 28, 30 im Bereich des Fahrbahnverlaufes des Kraftfahrzeuges 10 befinden und/oder wenn ein gefährlicher Zustand vorliegt. In diesem bevorzugten Ausführungsbeispiel wird ein gefährlicher Zustand erkannt, weil der Fußgänger 30 hinter dem entgegenkommenden Kraftfahrzeug 28 die Fahrbahn 32 kreuzt und die Gefahr eines Zusammenstoßes des eigenen Kraftfahrzeuges 10 mit dem Fußgänger 30 vorhanden ist. Ein gefährlicher Zustand liegt dann vor, wenn sich ein Objekt 28, 3 0 auf der eigenen Fahrspur befindet. Da sich der Fußgänger 30 im bevorzugten Ausführungsbeispiel auf der eigenen Fahrspur befindet, wird eine Markierung 36 in Blickrichtung des Fahrers als rotes Dreieck erzeugt. Eine potenziell gefährliche Situation liegt dann vor, wenn sich ein Objekt 28, 30 in der Nachbarschaft der eigenen Fahrspur befindet, beispielsweise ein Reh am rechten Fahrbahnrand und/oder ein Fußgänger auf der Nebenfahrbahn. Da sich das entgegenkommende Kraftfahrzeug 28 in der Nachbarschaft der eigenen Fahrspur befindet, wird eine Markierung 34 in Blickrichtung des Fahrers als gelbes Dreieck erzeugt.

In dem bevorzugten Ausführungsbeispiel nach Figur 1 werden Bildsensoren verwendet, die eine hohe Auflösung besitzen. Einsetzbare Halbleiter-Bildaufnehmer-Chips besitzen Auflösungen, die für eine zufriedenstellende Bilddarstellung ausreichen und Objekterkennung in Entfernungen bis 70 Meter ermöglichen. Eine Erkennung von Objekten, die weiter als 70 Meter vom Bildsensor entfernt sind, erfordern höher auflösende Bildsensoren (Imager) mit Standardauflösungen mit 1024x768 Pixel oder 1280x1024 Pixel. Mit Standardauflösungen von 1024x768 Pixel ist eine Objekterkennung bis etwa 110 Meter möglich, während bei einer Standardauflösung von 1280x1024 Pixel eine Objekterkennung bis etwa 140 Meter durchgeführt werden kann. Die Vergütung der Kameraoptik ist im bevorzugten Ausführungsbeispiel nach Figur 1 an den verwendeten Spektralbereich angepasst. Die Vergütung ist dabei so ausgelegt, dass die optischen Eigenschaften im sichtbaren Spektralbereich nicht nennenswert verschlechtert sind. Hierdurch ist es möglich, das Bildsensorsystem auch für andere Funktionen bei Tag, also im sichtbaren Spektralbereich, zu verwenden. Weiterhin wird die Apertur der Optik an die herrschende Dunkelempfindlichkeit angepasst.

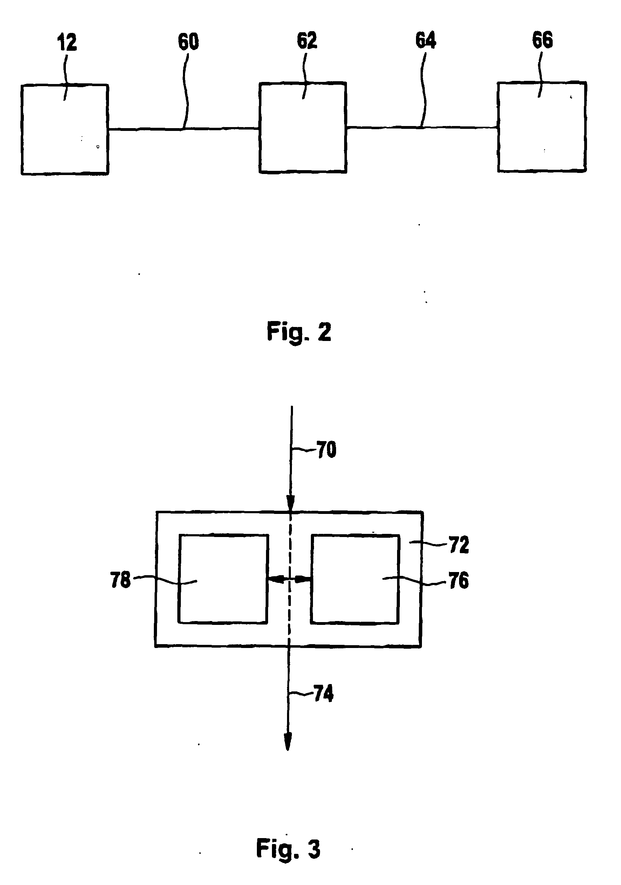

Figur 2 zeigt ein Blockdiagramm der Vorrichtung zur Verbesserung der Sicht in einem Kraftfahrzeug des bevorzugten Ausführungsbeispiels nach Figur 1, bestehend aus einem infrarotempfindlichen Bildsensorsystem 12, einer Verarbeitungseinheit 62 und wenigstens einem Signalisierungsmittel 66. Das infrarotempfindliche Bildsensorsystem 12 erfasst optische Signale der Umgebung des Kraftfahrzeuges in Form von Bilddaten. Über die Signalleitung 60 werden die optischen Signale elektrisch und/oder optisch vom infrarotempfindlichen Bildsensorsystem 12 zur Verarbeitungseinheit 62 übertragen. Alternativ oder zusätzlich ist eine Übertragung per Funk möglich. Die Verarbeitungseinheit 62 besteht aus dem in Figur 3 dargestellten Modul 72, das in diesem bevorzugten Ausführungsbeispiel als Programme wenigstens eines Mikroprozessors ausgestaltet ist. Im bevorzugten Ausführungsbeispiel liegt die Verarbeitungseinheit 62 physikalisch getrennt von den anderen Komponenten 12, 66 vor. Alternativ ist es möglich, dass die Verarbeitungseinheit 62 zusammen mit dem Bildsensorsystem 12 eine Einheit bildet oder dass die Verarbeitungseinheit 62 im Signalisierungsmittel 66 untergebracht ist. Die Verarbeitungseinheit 62 berechnet aus den optischen Signalen des infrarotempfindlichen Bildsensorsystems 12 Signale zur Warnung des Fahrers. Die berechneten Signale zur Warnung des Fahrers werden über eine Signalleitung 64 an wenigstens ein Signalisierungsmittel 66 elektrisch und/oder optisch übertragen. Alternativ oder zusätzlich ist eine Übertragung per Funk möglich. Die Signalisierungsmittel 66 erzeugen aus den Signalen zur Warnung des Fahrers die eigentliche optische Warnung. Als Signalisierungsmittel 66 wird im bevorzugten Ausführungsbeispiel eine Projektionseinrichtung eingesetzt. Die Projektionseinrichtung ist ein Einfach-Head-up-Display, das eine optische Warnung auf der Windschutzscheibe erzeugt.

Figur 3 zeigt ein Ablaufdiagramm des Verfahrens zur Verbesserung der Sicht in einem Kraftfahrzeug des bevorzugten Ausführungsbeispiels entsprechend der Figur 1 und der Vorrichtung nach Figur 2, bestehend aus dem Verarbeitungsmodul 72. Die optischen Signale 70 werden dem Verarbeitungsmodul 72 zugeführt, das als Ausgabesignale die Signale zur Warnung des Fahrers 74 berechnet. Das Verarbeitungsmodul besteht aus zwei parallelarbeitenden Modulen, dem Modul zur Fahrbahnverlaufserkennung 76 und dem Modul zur Objekterkennung 78. Die Algorithmen zur Spur- und/oder Fahrbahnerkennung des Moduls zur Fahrbahnverlaufserkennung 76 und zur Objekterkennung des Moduls zur Objekterkennung 78 sind zu einem Gesamtalgorithmus zusammengefügt. Diese beiden Module 76, 78 tauschen Informationen und Teilergebnisse während der Verarbeitung aus. Im Modul zur Fahrbahnverlaufserkennung 76 werden aus den optischen Signalen 70 Objekte ermittelt, welche die Fahrbahn oder die Fahrspur festlegen. Diese Objekte sind beispielsweise Leitpfosten und/oder Fahrspurlinien. Durch die Kenntnis der Lage dieser Objekte, wird der Fahrbahnverlauf berechnet. Im Modul zur Objekterkennung 78 werden aus den optischen Signalen ebenfalls Objekte ermittelt. Anschließend wird eine Berechnung der Lage der erkannten Objekte durchgeführt. Durch diesen Gesamtalgorithmus ist eine Objektzuordnung zum Fahrbahnverlauf, insbesondere zur Fahrspur und/oder zur Fahrbahn, möglich.

Das beschriebene Verfahren und die Vorrichtung sind nicht auf ein einzelnes Signalisierungsmittel beschränkt. Vielmehr werden in einer Variante zusätzliche Signalisierungsmittel verwendet, um wenigstens eine optische Warnung zu erzeugen. Alternativ oder zusätzlich zur Projektionseinrichtung wird als Signalisierungsmittel wenigstens ein Head-up-Display verwendet. Ein Head-up-Display ist ein Signalisierungsmittel, das ein virtuelles Bild erzeugt, welches in die Windschutzscheibe des Kraftfahrzeuges so eingespiegelt wird, dass das Bild dem Fahrer in einigen Metern vor dem Fahrzeug zu liegen scheint. In einer Variante wird bei der Anzeige wenigstens eines Warnsymbols wenigstens ein Head-up-Display verwendet.

In einer Variante des Verfahrens und der Vorrichtung erfolgt die wenigstens eine optische Warnung zusätzlich bei Sichtbarkeit des wenigstens einen Objektes für den Fahrer. Dabei wird die wenigstens eine optische Warnung vor der Sichtbarkeit des wenigstens einen Objektes für den Fahrer durchgeführt und die optische Warnung bei Sichtbarkeit des wenigstens einen Objektes fortgeführt.

In einer weiteren Variante des Verfahrens und der Vorrichtung wird als optische Warnung wenigstens ein Lichtfleck verwendet. Ein Lichtfleck ist dabei so festgelegt, dass er arm an inhärent enthaltenen Informationen ist. Der Lichtfleck hat lediglich die Aufgabe, eine Blickhinwendung des Fahrers in Richtung eines Objektes zu bewirken. Die Form des wenigstens einen Lichtflecks ist dabei kreisförmig und/oder ellipsenförmig und/oder sternförmig und/oder dreieckig und/oder viereckig und/oder mehreckig und/oder klecksförmig. Alternativ oder zusätzlich wird die Form des Lichtfleckes durch ein Mosaik wenigstens eines Lichtpunktes gebildet. Dabei wird der Lichtfleck durch einen Lichtimpuls erzeugt.

In einer Variante des beschriebenen Verfahrens und der Vorrichtung werden als Warnsymbole international gebräuchliche und/oder international verständliche Symbole verwendet. Als Warnsymbolen werden Schriftzeichen, beispielsweise Ausrufezeichen, und/oder verkehrszeichenähnliche Symbole und/oder Gefahrensymbole eingesetzt.

Alternativ oder zusätzlich wird in einer weiteren Variante des beschriebenen Verfahrens und der Vorrichtung die wenigstens eine optische Warnung in der Anzeigedauer und/oder der Wiederholfrequenz und/oder der Größe und/oder der Farbe und/oder der Intensität verändert. Dadurch wird eine unterschiedlich schnelle Blickhinwendung des Fahrers je nach Objekt und/oder der Gefährlichkeit des Objektes für den Fahrer des Kraftfahrzeuges bewirkt.

In einer weiteren Variante erfolgt die wenigstens eine optische Warnung unmittelbar vor der Sichtbarkeit des wenigstens einen Objektes für den Fahrer. Hierdurch erkennt der Fahrer das Objekt sofort nach der Blickhinwendung, da das Objekt nach der Blickhinwendung für den Fahrer sichtbar wird. Der Fahrer hat dadurch die Möglichkeit, die Gefährlichkeit, die von dem Objekt ausgeht, selbst zu beurteilen.

Das beschriebene Verfahren und die Vorrichtung sind nicht auf ein einzelnes Bildsensorsystem beschränkt. Vielmehr werden in einer Variante zusätzliche Bildsensorsysteme verwendet, deren optischen Signale der wenigstens einen Verarbeitungseinheit zugeführt werden. Alle verwendeten Bildsensorsysteme sind dabei mit Farbbildsensoren und/oder schwarz/weiß-Bildsensoren ausgerüstet. Die spektrale Empfindlichkeit der Bildsensorsysteme liegt im sichtbaren Spektralbereich und/oder im infraroten Spektralbereich. In einer weiteren Variante wird wenigstens ein Bildsensorsystem verwendet, das aus wenigstens zwei Bildsensoren besteht, die im wesentlichen dieselbe Szene aufnehmen. In einer anderen Variante wird wenigstens eine Stereokamera eingesetzt.

In einer weiteren Variante der beschriebenen Vorrichtung und des Verfahrens wird mehr als eine Verarbeitungseinheit verwendet. Hierdurch ist eine Verteilung der Algorithmen auf mehrere Verarbeitungseinheiten möglich. Gleichzeitig liegt eine Redundanz der benötigten Rechenkapazität vor, so dass beim Ausfall einer Verarbeitungseinheit, die Vorrichtung und das Verfahren zur Verbesserung der Sicht weiterhin funktionsfähig bleiben, da die verbleibenden Verarbeitungseinheiten den Ausfall kompensieren.

Durch die Verwendung von wenigstens einem weiteren Sensor erreicht man in einer weiteren Variante des beschriebenen Verfahrens und der Vorrichtung eine verbesserte Warnung des Fahrers eines Kraftfahrzeuges. Als wenigstens ein weiterer Sensor wird wenigstens ein Radarsensor und/oder wenigstens ein Ultraschallsensor und/oder wenigstens ein LIDAR-Abstandssensor verwendet. Die Verwendung wenigstens eines weiteren Sensors ermöglicht die redundante Bestimmung der Lage wenigstens eines Objektes und/oder des Fahrbahnverlaufes.

## Patentansprüche

1. Verfahren zur Warnung des Fahrers eines Kraftfahrzeuges (10), wobei wenigstens ein Signalisierungsmittel (66) wenigstens eine optische Warnung (34, 36) erzeugt, wobei das wenigstens eine Signalisierungsmittel (66) die wenigstens eine optische Warnung (34, 36) in Richtung wenigstens eines Objektes (28, 30) im Blickfeld des Fahrers erzeugt, wobei sich das wenigstens eine Objekt (28, 30) in der Umgebung des Kraftfahrzeuges (10) befindet, **dadurch gekennzeichnet, dass** die wenigstens eine optische Warnung (34, 36) zumindest vor der Sichtbarkeit des wenigstens einen Objektes (28, 30) für den Fahrer erfolgt und dass die Wiederholfrequenz und/oder die Intensität der wenigstens einen optischen Warnung (34, 36) verändert wird.

2. Verfahren nach Anspruch 1, **dadurch gekennzeichnet, dass** die wenigstens eine optische Warnung (34, 36) wenigstens ein Lichtfleck und/oder wenigstens ein Warnsymbol ist.

3. Verfahren nach einem der vorhergehenden Ansprüche, **dadurch gekennzeichnet, dass** die Anzeigedauer und/oder die Größe und/oder die Farbe der wenigstens einen optischen Warnung (34, 36) veränderbar ist.

4. Verfahren nach einem der vorhergehenden Ansprüche, **dadurch gekennzeichnet, dass** die wenigstens eine optische Warnung (34, 36) unmittelbar vor der Sichtbarkeit des wenigstens einen Objektes (28, 30) für den Fahrer erfolgt.

5. Verfahren nach einem der vorhergehenden Ansprüche, **dadurch gekennzeichnet, dass** die wenigstens eine optische Warnung (34, 36) in Abhängigkeit von der Fahrsituation, insbesondere der Gefährlichkeit der Fahrsituation, erfolgt.

6. Verfahren nach einem der vorhergehenden Ansprüche, **dadurch gekennzeichnet, dass** die wenigstens eine optische Warnung (34, 36) wenigstens in Abhängigkeit von optischen Signalen der Umgebung des Kraftfahrzeuges (10) erfolgt, wobei die optischen Signale durch wenigstens ein Bildsensorsystem (12), insbesondere ein infrarotempfindliches Bildsensorsystem, erzeugt werden.

7. Verfahren nach einem der vorhergehenden Ansprüche, **dadurch gekennzeichnet, dass** wenigstens eine Projektionseinrichtung und/oder wenigstens ein Head-up-Display als Signalisierungsmittel (66) die wenigstens eine optische Warnung (34, 36) erzeugt.

8. Vorrichtung zur Warnung des Fahrers eines Kraftfahrzeuges (10), mit wenigstens einem Signalisierungsmittel (66) zur Erzeugung wenigstens einer optischen Warnung (34, 36), wobei das wenigstens eine Signalisierungsmittel (66) Mittel aufweist, um die wenigstens eine optische Warnung (34, 36) in Richtung wenigstens eines Objektes (28, 30) im Blickfeld des Fahrers zu erzeugen, wobei sich das wenigstens eine Objekt (28, 30) in der Umgebung des Kraftfahrzeuges (10) befindet, **dadurch gekennzeichnet, dass** das wenigstens eine Signalisierungsmittel (66) Mittel aufweist, um die wenigstens eine optische Warnung (34, 36) in Richtung wenigstens eines objektes (28, 30) in der Umgebung des Kraftfahrzeuges (10) zumindest vor der Sichtbarkeit des wenigstens einen Objektes (28, 30) für den Fahrer zu erzeugen und dass das wenigstens eine Signalisierungsmittel (66) Mittel aufweist, um die Wiederholfrequenz und/oder die Intensität der wenigstens einen optischen Warnung (34, 36) zu verändern.

9. Vorrichtung nach Anspruch 8, **dadurch gekennzeichnet, dass** das wenigstens eine Signalisierungsmittel (66) wenigstens eines der nachfolgend aufgeführten Mittel aufweist:
- Mittel, um als wenigstens eine optische Warnung (34, 36) wenigstens einen Lichtfleck und/oder wenigstens ein Warnsymbol zu erzeugen,
- Mittel, um die Anzeigedauer und/oder die Größe und/oder die Farbe der wenigstens einen optischen Warnung (34, 36) zu verändern,
- Mittel, um die wenigstens eine optische Warnung (34, 36) in Richtung wenigstens eines Objektes (28, 30) in der Umgebung des Kraftfahrzeuges (10) unmittelbar vor der Sichtbarkeit des wenigstens einen Objektes (28, 30) für den Fahrer zu erzeugen,
- Mittel, um die wenigstens eine optische Warnung (34, 36) in Abhängigkeit von der Fahrsituation, insbesondere der Gefährlichkeit der Fahrsituation, zu erzeugen.

10. Vorrichtung nach einem der Ansprüche 8 oder 9, **dadurch gekennzeichnet, dass**
- die Vorrichtung wenigstens ein Bildsensorsystem (12), insbesondere wenigstens ein infrarotempfindliches Bildsensorsystem, zur Erzeugung von optischen Signalen der Umgebung des Kraftfahrzeuges (10) umfasst, und/oder
- das wenigstens eine Signalisierungsmittel (66) wenigstens eine Projektionseinrichtung und/oder wenigstens ein Head-up-Display ist.

## Claims

1. Method for warning the driver of a motor vehicle (10), at least one signalling means (66) generating at least one visual warning (34, 36), the at least one signalling means (66) generating the at least one visual warning (34, 36) in the direction of at least one object (28, 30) in the field of vision of the driver, the at least one object (28, 30) being located in the surroundings of the motor vehicle (10), **characterized in that** the at least one visual warning (34, 36) is issued at least before the at least one object (28, 30) becomes visible to the driver, and **in that** the repetition frequency and/or the intensity of the at least one visual warning (34, 36) is changed.

2. Method according to Claim 1, **characterized in that** the at least one visual warning (34, 36) is at least one light spot and/or at least one warning symbol.

3. Method according to one of the preceding claims, **characterized in that** the display duration and/or the magnitude and/or the colour of the at least one visual warning (34, 36) can be changed.

4. Method according to one of the preceding claims, **characterized in that** the at least one visual warning (34, 36) is issued directly before the at least one object (28, 30) becomes visible to the driver.

5. Method according to one of the preceding claims, **characterized in that** the at least one visual warning (34, 36) is issued as a function of the driving situation, in particular the dangerousness of the driving situation.

6. Method according to one of the preceding claims, **characterized in that** the at least one visual warning (34, 36) is issued at least as a function of visual signals of the surroundings of the motor vehicle (10), the visual signals being generated by at least one image sensor system (12), in particular an infrared-sensitive image sensor system.

7. Method according to one of the preceding claims, **characterized in that** at least one projection device and/or at least one head up display generates the at least one visual warning (34, 36) as a signalling means (66).

8. Device for warning the driver of a motor vehicle (10), having at least one signalling means (66) for generating at least one visual warning (34, 36), the at least one signalling means (66) having means for generating the at least one visual warning (34, 36) in the direction of at least one object (28, 30) in the field of vision of the driver, the at least one object (28, 30) being located in the surroundings of the motor vehicle (10), **characterized in that** the at least one signalling means (66) has means for generating the at least one visual warning (34, 36) in the direction of at least one object (28, 30) in the surroundings of the motor vehicle (10) at least before the at least one object (28, 30) becomes visible to the driver, and **in that** the at least one signalling means (66) has means for changing the repetition frequency and/or the intensity of the at least one visual warning (34, 36).

9. Device according to Claim 8, **characterized in that** the at least one signalling means (66) has at least one of the means specified below:
- means for generating at least one light spot and/or at least one warning symbol as at least one visual warning (34, 36),
- means for changing the display duration and/or the magnitude and/or the colour of the at least one visual warning (34, 36),
- means for generating the at least one visual warning (34, 36) in the direction of at least one object (28, 30) in the surroundings of the motor vehicle (10) directly before the at least one object (28, 30) becomes visible to the driver,
- means for generating the at least one visual warning (34, 36) as a function of the driving situation, in particular the dangerousness of the driving situation.

10. Device according to one of Claims 8 or 9, **characterized in that**
- the device comprises at least one image sensor system (12), in particular at least one infrared-sensitive image sensor system, for generating visual signals of the surroundings of the motor vehicle (10), and/or
- the at least one signalling means (66) is at least one projection device and/or at least one head up display.

## Revendications

1. Procédé d'alerte du conducteur d'un véhicule automobile (10), selon lequel au moins un moyen de signalisation (66) génère au moins une alerte optique (34, 36) en direction d'au moins un objet (28, 30) situé dans le champ de vision du conducteur, un objet (28, 30) se trouvant dans l'environnement du véhicule automobile (10),
**caractérisé en ce qu'**
on génère au moins une alerte optique (34, 36) au moins avant la visibilité d'un objet (28, 30) pour le conducteur, et on fait varier la fréquence de répétition et/ou l'intensité d'une alerte optique (34, 36).

2. Procédé selon la revendication 1,
**caractérisé en ce qu'**
au moins une alerte optique (34, 36) est au moins un point lumineux et/ou un symbole d'alerte.

3. Procédé selon l'une quelconque des revendications précédentes,
**caractérisé en ce qu'**
on modifie la durée d'affichage et/ou la taille et/ou la couleur d'au moins une alerte optique (34, 36).

4. Procédé selon l'une quelconque des revendications précédentes,
**caractérisé en ce qu'**
on effectue au moins une alerte optique (34, 36) immédiatement avant la visibilité d'au moins un objet (28, 30) pour le conducteur.

5. Procédé selon l'une quelconque des revendications précédentes,
**caractérisé en ce qu'**
on effectue au moins une alerte optique (34, 36) en fonction de la situation de conduite, en particulier de la dangerosité de la situation de conduite.

6. Procédé selon l'une quelconque des revendications précédentes,
**caractérisé en ce qu'**
on effectue au moins une alerte optique (34, 36) au moins en fonction de signaux optiques de l'environnement du véhicule automobile (10), les signaux optiques étant générés par au moins un système de capteurs d'image (12), en particulier par un système de capteurs d'image infrarouge.

7. Procédé selon l'une quelconque des revendications précédentes,
**caractérisé en ce qu'**
au moins un dispositif de projection et/ou au moins un collimateur de pilotage servant de moyen de signalisation (66) génère au moins une alerte optique (34, 36).

8. Dispositif d'alerte du conducteur d'un véhicule automobile (10) comprenant au moins un moyen de signalisation (66) pour générer au moins une alerte optique (34, 36), dans lequel un moyen de signalisation (66) présente des moyens pour générer au moins une alerte optique (34, 36) en direction d'au moins un objet (28, 30) situé dans le champ de vision du conducteur, au moins un objet (28, 30) se trouvant dans l'environnement du véhicule automobile (10),
**caractérisé en ce qu'**
un moyen de signalisation (66) présente des moyens générant une alerte optique (34, 36) dans la direction d'un objet (28, 30) situé dans l'environnement du véhicule automobile (10) au moins avant la visibilité d'un objet (28, 30) pour le conducteur, et un moyen de signalisation (66) présente des moyens faisant varier la fréquence de répétition et/ou l'intensité de l'alerte optique (34, 36).

9. Dispositif selon la revendication 8,
**caractérisé en ce qu'**
au moins un moyen de signalisation (66) présente au moins un des moyens cités ci-après :
- des moyens pour générer au moins une alerte optique (34, 36) en forme d'au moins un point lumineux et/ ou d'un symbole d'alerte,
- des moyens pour modifier la durée d'affichage et/ ou la taille et/ ou la couleur d'une alerte optique (34, 36),
- des moyens générant une alerte optique (34, 36) dans la direction d'un objet (28, 30) situé dans l'environnement du véhicule automobile (10) immédiatement avant la visibilité d'au moins un objet (28, 30) pour le conducteur,
- des moyens générant une alerte optique (34, 36) en fonction de la situation de conduite, en particulier de la dangerosité de la situation de conduite.

10. Dispositif selon l'une des revendications 8 ou 9,
**caractérisé en ce que**
- le dispositif comprend au moins un système de capteurs d'image (12), en particulier un système de capteurs d'image infrarouge pour générer des signaux optiques de l'environnement du véhicule automobile (10), et/ou
- au moins un moyen de signalisation (66) est au moins un dispositif de projection et/ou un collimateur de pilotage.
